# EUROPEAN PATENT SPECIFICATION

(11) **EP 4 532 777 B1**
(45) Date of publication and mention of the grant of the patent: **25.11.2026**
(21) Application number: 23728143.1
(22) Date of filing: 25.05.2023
(51) Int. Cl.: C21B 13/00, C21B 13/02, C21B 5/00, C21B 7/24

(54) **A METHOD AND AN ARRANGEMENT FOR A CONTINUOUS PRODUCTION OF SPONGE IRON FROM IRON ORE**
VERFAHREN UND VORRICHTUNG ZUR KONTINUIERLICHEN HERSTELLUNG VON EISENSCHWAMM AUS EISENERZ
PROCÉDÉ ET AGENCEMENT POUR LA PRODUCTION EN CONTINU DE FER SPONGIEUX À PARTIR DE MINERAI DE FER

(30) Priority: 25.05.2022 SE 2250624
(43) Date of publication of application: 09.04.2025
(73) Proprietor: HYBRIT Development AB, 111 64 Stockholm (SE)
(72) Inventor: HYLLANDER, Gunilla, 954 42 Södra Sunderbyn (SE)
(74) Representative: Zacco Sweden AB
(86) International application number: PCT/SE2023/050513
(87) International publication number: WO 2023/229517

(56) References cited:
- WO-A1-2021/035815
- KR-A- 20120 031 060
- US-A- 4 202 534

## Description

### TECHNICAL FIELD

The present invention relates to continuous production of sponge iron from iron ore, comprising the steps of: charging iron ore into a direct reduction shaft; providing a hydrogen-rich reduction gas; heating the hydrogen-rich reduction gas to a predetermined temperature; introducing the heated hydrogen-rich reduction gas into the direct reduction shaft in order to reduce the iron ore and produce sponge iron, and extracting the produced sponge iron from the direct reduction shaft.

The invention also relates to an arrangement for producing sponge iron, comprising: a direct reduction shaft; a device for charging iron ore into the direct reduction shaft; a device for extracting sponge iron from the direction reduction shaft; a hydrogen-rich reduction gas source; a reduction gas line extending from the device for providing the hydrogen-rich reduction gas to the direction reduction shaft; and a heater for heating the hydrogen-rich reduction gas.

### BACKGROUND

Continuous production of sponge iron by means of direct reduction of iron ore in a direct reduction shaft is known. Thereby, hydrogen may primarily be used as the reduction gas, whereby carbon dioxide emissions from the shaft are considerably reduced in comparison to technology that primarily uses carbon-containing gas, such as natural gas, as the reduction gas. Hydrogen gas is typically produced in so called electrolysers, through a process driven by electricity. The access to the electric power needed for the electrolysers may vary over time and/or the price of the available electric power may fluctuate. As a result thereof, the flow rate from the electrolysers to the direct reduction shaft may fluctuate. Prior art suggests addition of further reduction gas, such as natural gas, to the flow of hydrogen gas in order to compensate for the fluctuations of the latter. However, such compensation results in an increased emission of carbon dioxide emission. Patent Literature US 4 202 534 A and KR 2012 0031060 A further disclose alternative methods for the production of sponge iron from iron ore.

### THE OBJECT OF THE INVENTION

It is an object of the invention to present a method of and an arrangement for producing sponge iron by direct reduction of iron ore by means of a hydrogen-rich reduction gas, which method and arrangement compensate for fluctuations of the flow rate of the hydrogen-rich reduction gas with a reduced emission of carbon dioxide from the direct reduction in comparison to solution in which natural gas is used for compensation or with no increase at all of the emission of carbon dioxide.

The fluctuations of the flow rate of the hydrogen-rich gas may be due to deliberate control of the flow rate, for example caused by fluctuations of prize of electric power needed for production of hydrogen used in the process, or non-deliberate fluctuations, for example caused by fluctuating availability of electric power used for generating the hydrogen used in the method. In the cases when hydrogen gas is taken from a top gas from the direct reduction shaft and added to the hydrogen gas used as reduction gas, the fluctuations may also be caused by fluctuating conditions in the direct reduction shaft resulting in fluctuations of the flow rate of hydrogen gas taken from the top gas. The fluctuations may be of substantial degree and may have a duration of considerable time.

### SUMMARY

The object of the invention is achieved by means of a method for a continuous production of sponge iron from iron ore as disclosed in claims 1-8.

According to one embodiment, the method comprises the further step of measuring the composition of the hydrogen-rich reduction gas, wherein the flow rate of the iron ore into the shaft and the flow rate of the sponge iron extracted out of the direct reduction shaft are controlled on basis of the measured flow rate of the hydrogen-rich reduction gas and on basis of the measured composition of the hydrogen-rich reduction gas.

According to one embodiment, the composition of the hydrogen-rich reduction gas is evaluated with regard to its content of reduction means that will result in the direct reduction of the iron ore, wherein the content of reduction means and the flow rate of the hydrogen-rich reduction gas are multiplied with each other for the generation of an input value on basis of which the flow rates of the iron ore and the sponge iron are controlled.

According to one embodiment, the flow rate of the iron ore and the flow rate of the sponge iron are controlled such that they correspond to each other and such that the combined level of iron ore and sponge iron in the direct reduction shaft is maintained at a constant level.

The flow rate of the hydrogen-rich reduction gas has a predetermined nominal value applied during a predetermined nominal operation condition of the direct reduction shaft, and wherein a predetermined initial decrease of the flow rate of the hydrogen-rich gas from said nominal value down to a threshold value is compensated by addition of methane gas to the hydrogen rich gas, without corresponding decrease of the flow rate of iron ore and sponge iron, and the flow rate of the iron ore and the flow rate of the sponge iron are controlled on basis of the measured flow rate of the hydrogen gas when the flow rate of the hydrogen-rich gas decreases further below said threshold value.

According to one embodiment, the method comprises the step of measuring a pressure in the direct reduction shaft, wherein the addition of said methane gas is controlled such that a nominal operation pressure is maintained in the direct reduction shaft upon decrease of the flow rate of hydrogen-rich reduction gas from said nominal value to said threshold value.

The hydrogen-rich gas comprises at least 80 wt.% hydrogen gas. According to one embodiment, the hydrogen-rich gas comprises at least 90 wt.% hydrogen gas.

According to one embodiment, the hydrogen-rich gas comprises at least 95 wt.% hydrogen gas. According to one embodiment, the hydrogen-rich reduction gas is comprised by hydrogen gas produced in an electrolyser and hydrogen gas obtained from off-gas extracted from the direction reduction shaft.

According to one embodiment, the step of measuring the flow rate of the hydrogen-rich gas comprises measuring the flow rate of the hydrogen carried by the off-gas or measuring the flow rate of the hydrogen gas obtained from the off-gas. Preferably, the method comprises the step of mixing the hydrogen gas from the electrolyser with the hydrogen gas obtained from the off-gas, wherein the measurement is performed upstream a point where said hydrogen gases are mixed, as seen in a flow direction of the respective hydrogen gas. The flow rate of the hydrogen gas in the off-gas is a good indicator of whether the reduction has been performed with sufficient amount of hydrogen gas to result in sponge iron with a predetermined minimum level of metallisation, preferably above 90 wt.%, or, even more preferred, above 92.5 wt.% iron. By controlling the flow rate of iron ore into the direct reduction shaft on basis of the measured flow rate of the hydrogen gas in the off-gas or obtained from the off-gas and controlling the flow rate of the sponge iron extracted out of the direct reduction shaft on basis of the measured flow rate of the hydrogen gas in the off-gas or obtained from the off-gas, the flow rate of the hydrogen carried by the off-gas can be controlled to be within a predetermined range that results in sponge iron having at least said pre-determined minimum metallisation level. The object of the invention is also achieved by means of an arrangement for producing sponge iron as disclosed in appended claims 9-15.

According to one embodiment, the arrangement comprises a sensor for measuring the composition of the hydrogen-rich reduction gas, and wherein the control unit is configured control the device for charging iron ore into the direct reduction shaft and to control the device for extracting sponge iron from the direct reduction shaft on basis of input from said sensor.

According to one embodiment, the control unit is configured to evaluate the composition of the hydrogen-rich reduction gas with regard to its content of reduction means that will result in the direct reduction of the iron ore, and to multiply the content of reduction means and the flow rate of the hydrogen-rich reduction gas with each other and to generate an input value on basis of which the device for charging iron ore and the device for extracting sponge iron are controlled.

According to one embodiment, the control unit is configured to the device for charging iron ore into the direct reduction shaft and to control the device for extracting sponge iron from the direct reduction shaft such that flows of iron ore and sponge iron correspond to each other and such that the combined level of iron ore and sponge iron in the direct reduction shaft is maintained at a constant level.

The arrangement comprises a methane gas source and a device for controlling a flow of methane gas from said methane gas source into the reduction gas line, and wherein the flow rate of the hydrogen-rich reduction gas has a predetermined nominal value applied during a predetermined nominal operation condition of the direct reduction shaft, and wherein, as a response to a measured predetermined initial decrease of the flow rate of the hydrogen-rich gas from said nominal value down to a threshold value, the control unit is configured to compensate for said decrease by controlling an addition of methane gas from the methane gas source to the hydrogen-rich reduction gas, without corresponding decrease of the flow rate of iron ore and sponge iron, and wherein control unit is configured to control the flow rate of the iron ore and the flow rate of the sponge iron by controlling the device for charging iron ore and the device for extracting sponge iron on basis of the measured flow rate of the hydrogen-rich reduction gas when the flow rate of the hydrogen-rich reduction gas decreases further below said threshold value.

According to one embodiment, the arrangement comprises a sensor for measuring a pressure in the direct reduction shaft, and wherein the control unit is configured to control the addition of said methane gas by such that a nominal operation pressure is maintained in the direct reduction shaft upon decrease of the flow rate of hydrogen-rich reduction gas from said nominal value to said threshold value.

According to one embodiment, the hydrogen-rich reduction gas source comprises an electrolyser and an off-gas return line for returning off-gas extracted from the direction reduction shaft.

According to some embodiments, the arrangement further comprises a flow rate meter configured to measure the flow rate of the hydrogen gas in the off-gas return line, wherein the control unit is configured to control the device for charging iron ore into the direct reduction shaft and to control the device for extracting sponge iron from the direct reduction shaft on basis of input from the flow rate meter. The control unit is configured to control said devices such that the flow rate of the iron ore and the flow rate of the sponge iron are proportional to the measured flow rate of the flow rate of hydrogen carried by the off-gas. In the disclosed embodiment, the flow meter is positioned upstream an off-gas cleaning arrangement provided in the off-gas return line. However, provided that the efficiency of the off-gas cleaning arrangement in terms of what percentage of the hydrogen gas it is able of withdrawing, the flow rate meter may as well be located downstream the off-gas cleaning arrangement. The control is made with regard to previous data regarding relationship between sponge iron quality, mostly defined by the metallisation degree, and the hydrogen gas content in the off-gas.

### BRIEF DESCRIPTION OF THE DRAWING

Figure 1 is a schematic representation of an arrangement according to an embodiment of the present invention, on which the method according to the invention is applied, and
Fig. 2 shows a second embodiment of the invention.

### DETAILED DESCRIPTION

In the following detailed description, embodiments of the method of the invention will be disclosed, as well an arrangement configured to carry out the method.

The arrangement for producing sponge iron comprises: a direct reduction shaft 1, a device 2 for charging iron ore into the direct reduction shaft 1, a device 3 for extracting sponge iron from the direction reduction shaft 1, a hydrogen-rich reduction gas source 4, 13 , a reduction gas line 5 extending from the hydrogen-rich reduction gas source 4, 13 to the direct reduction shaft 1. The hydrogen-rich gas comprises at least 95 wt.% hydrogen gas. There is also provided a heater 6 for heating the hydrogen-rich reduction gas in the reduction gas line 5. According to one embodiment the heater 6 is an electric heater using electric resistance elements for heating the gas passing through the heater. The direct reduction shaft 1 is a vertical shaft in which the iron ore is charged through an inlet at the top of the shaft and extracted through a bottom of the shaft. The device 2 for charging the iron ore comprises a valve device suitable for the purpose, and the device 3 for extracting the sponge iron comprises a valve device suitable for that purpose. The hydrogen-rich reduction gas source comprises an electrolyser 4 and an off-gas return line 13 for returning off-gas extracted from the direction reduction shaft 1. The heater 6 is a heater for heating the reduction gas to a temperature in the range of 750-1 100 °C.

The arrangement further comprises a flow rate meter 7 configured to measure the flow rate of the hydrogen-rich reduction gas in the reduction gas line 5, and a control unit 8 configured to control the device 2 for charging iron ore into the direct reduction shaft 1 and to control the device 3 for extracting sponge iron from the direct reduction shaft 1 on basis of input from the flow rate meter 7. The control unit 8 is configured to control said devices 2, 3 such that the flow rate of the iron ore and the flow rate of the sponge iron are proportional to the measured flow rate of the hydrogen-rich reduction gas. The control unit 8 may be any suitable combination of hardware and software by means of which the operation of the arrangement is controlled.

The arrangement further comprises a sensor 9 for measuring the composition of the hydrogen-rich reduction gas. The control unit 8 is configured control the device 2 for charging iron ore into the direct reduction shaft 1 and to control the device 3 for extracting sponge iron from the direct reduction shaft 1 on basis of input from said sensor 9. More precisely the control unit 8 is configured to evaluate the measured composition of the hydrogen-rich reduction gas with regard to its content of reduction means that will result in the direct reduction of the iron ore, and to multiply the content of reduction means and the flow rate of the hydrogen-rich reduction gas with each other and to generate an input value on basis of which the device 2 for charging iron ore and the device 3 for extracting sponge iron are controlled.

Further, the control unit 8 is configured to control the device 2 for charging iron ore and to control the device 3 for extracting sponge iron such that the flows of iron ore and sponge iron correspond to each other and such that the combined level of iron ore and sponge iron in the direct reduction shaft 1 is maintained at a constant level.

The arrangement comprises a methane gas source 10 and a valve device 11 for controlling a flow of methane gas from said methane gas source 10 into the reduction gas line 5. The flow rate of the hydrogen-rich reduction gas has a predetermined nominal value applied during a predetermined nominal operation condition of the direct reduction shaft 1, and, as a response to a measured predetermined initial decrease of the flow rate of the hydrogen-rich gas from said nominal value down to a threshold value, the control unit 8 is configured to compensate for said decrease by controlling an addition of methane gas from the methane gas source to the hydrogen-rich reduction gas, without corresponding decrease of the flow rate of iron ore and sponge iron. The control unit 8 is configured to control the flow rate of the iron ore and the flow rate of the sponge iron by controlling the device 2 for charging iron ore and the device 3 for extracting sponge iron on basis of the measured flow rate of the hydrogen-rich reduction gas when the flow rate of the hydrogen-rich reduction gas decreases further below said threshold value.

The arrangement further comprises a sensor 12 for measuring a pressure in the direct reduction shaft 1. The output from the pressure sensor 12 is used as input to the control unit 8. The control unit 8 is configured to control the addition of said methane gas such that a nominal operation pressure is maintained in the direct reduction shaft 1 upon decrease of the flow rate of hydrogen-rich reduction gas from said nominal value to said threshold value.

Needless to say, the arrangement is also provided with further equipment well known to the person skilled in the art for achieving functions such as pressurisation, cleaning of off-gas etc. The arrangement thus also comprises an off-gas cleaning arrangement 14 off-gas return line 13 and a compressor arrangement 15 provided in the reduction gas line 5. There may also be further compressors and cleaning steps provided for, if found necessary.

The arrangement is thus configured so as to perform the method of the invention. The method comprises the following steps:
- charging iron ore into a direct reduction shaft 1,
- providing a hydrogen-rich reduction gas,
- heating the hydrogen-rich reduction gas to a predetermined temperature,
- introducing the heated hydrogen-rich reduction gas into the direct reduction shaft 1 in order to reduce the iron ore and produce sponge iron, and
- extracting the produced sponge iron from the direct reduction shaft 1.

The method further comprises the steps of:
- measuring the flow rate of the hydrogen-rich gas, and
- controlling a flow rate of iron ore into the direction reduction shaft 1 on basis of the measured flow rate of the hydrogen-rich gas and
- controlling a flow rate of the sponge iron extracted out of the direct reduction shaft 1 on basis of the measured flow rate of the hydrogen-rich gas, wherein
- the flow rate of the iron ore and the flow rate of the sponge iron are controlled such that they are proportional to the measured flow rate of the hydrogen-rich reduction gas.

The method also comprises the step of measuring the composition of the hydrogen-rich reduction gas, wherein the flow rate of the iron ore into the shaft 1 and the flow rate of the sponge iron extracted out of the direct reduction shaft 1 are controlled on basis of the measured flow rate of the hydrogen-rich reduction gas and on basis of the measured composition of the hydrogen-rich reduction gas.

The composition of the hydrogen-rich reduction gas is evaluated with regard to its content of reduction means that will result in the direct reduction of the iron ore, and the content of reduction means and the flow rate of the hydrogen-rich reduction gas are multiplied with each other for the generation of an input value on basis of which the flow rates of the iron ore and the sponge iron are controlled.

The flow rate of the iron ore and the flow rate of the sponge iron are controlled such that they correspond to each other and such that the combined level of iron ore and sponge iron in the direct reduction shaft 1 is maintained at a constant level.

The flow rate of the hydrogen-rich reduction gas has a predetermined nominal value applied during a predetermined nominal operation condition of the direct reduction shaft 1 and wherein a predetermined initial decrease of the flow rate of the hydrogen-rich gas from said nominal value down to a threshold value is compensated by addition of methane gas to the hydrogen rich gas, without corresponding decrease of the flow rate of iron ore and sponge iron, and wherein the flow rate of the iron ore and the flow rate of the sponge iron are controlled on basis of the measured flow rate of the hydrogen gas when the flow rate of the hydrogen-rich gas decreases further below said threshold value. The addition of methane gas is an optional embodiment. As alternative embodiment, compensation of the fluctuation of the flow of the hydrogen rich reduction gas is only done by means of controlling the flow rate of the iron ore into the shaft and the flow rate of the sponge iron out of the shaft.

The method further comprises the step of measuring a pressure in the direct reduction shaft 1, wherein the addition of said methane gas is controlled such that a nominal operation pressure is maintained in the direct reduction shaft 1 upon decrease of the flow rate of hydrogen-rich reduction gas from said nominal value to said threshold value.

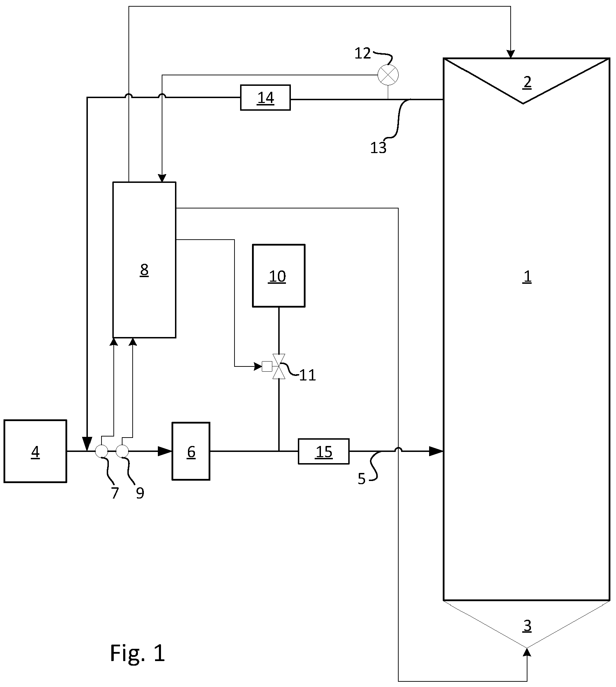

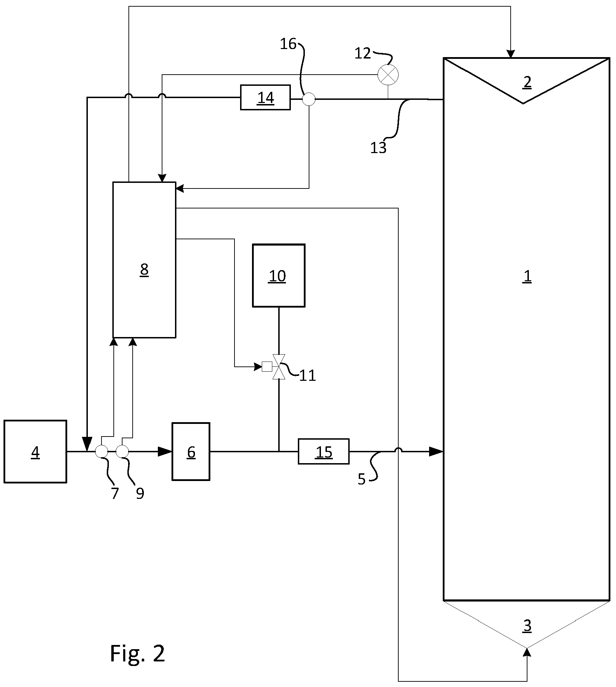

The second embodiment disclosed in fig. 2 differs from the embodiment shown in fig. 1 in that the step of measuring the flow rate of the hydrogen-rich gas comprises measuring the flow rate of the hydrogen carried by the off-gas or measuring the flow rate of the hydrogen gas obtained from the off-gas. Preferably, the method comprises the step of mixing the hydrogen gas from the electrolyser with the hydrogen gas obtained from the off-gas, wherein the measurement is performed upstream a point where said hydrogen gases are mixed, as seen in a flow direction of the respective hydrogen gas. The flow rate of the hydrogen gas in the off-gas is a good indicator of whether the reduction has been performed with sufficient amount of hydrogen gas to result in sponge iron with a predetermined minimum level of metallisation, preferably above 90 wt.%, or, even more preferred, above 92.5 wt.% iron. By controlling the flow rate of iron ore into the direct reduction shaft on basis of the measured flow rate of the hydrogen gas in the off-gas or obtained from the off-gas and controlling the flow rate of the sponge iron extracted out of the direct reduction shaft on basis of the measured flow rate of the hydrogen gas in the off-gas or obtained from the off-gas, the flow rate of the hydrogen carried by the off-gas can be controlled to be within a predetermined range that results in sponge iron having at least said pre-determined minimum metallisation level.

The arrangement according to fig. 2 comprises a flow rate meter 16 configured to measure the flow rate of the hydrogen gas in the off-gas return line 13, wherein the control unit 8 is configured to control the device 2 for charging iron ore into the direct reduction shaft 1 and to control the device 3 for extracting sponge iron from the direct reduction shaft 1 on basis of input from the flow rate meter 16. The control unit 8 is configured to control said devices 2, 3 such that the flow rate of the iron ore and the flow rate of the sponge iron are proportional to the measured flow rate of the flow rate of hydrogen carried by the off-gas. In the disclosed embodiment, the flow meter 16 is positioned upstream the off-gas cleaning arrangement 14. However, provided that the efficiency of the off-gas cleaning arrangement 14 in terms of what percentage of the hydrogen gas it is able of withdrawing, the flow rate meter 16 may as well be located downstream the off-gas cleaning arrangement 14.

The control unit 8 is preferably configured so as to prioritize the input from the flow rate meter 16 in the off-gas return line visavi the input from the flow rate meter 7 in the reduction gas line 5. Accordingly, the input from the flow meter in the off-gas return line 13 will be decisive for the control of said devices 2, 3 such that the flow rate of the iron ore and the flow rate of the sponge iron are proportional to the measured flow rate of the flow rate of hydrogen carried by the off-gas in case the input from the different meters result in different suggestions of the output from the control unit 8.

## Claims

1. A method for a continuous production of sponge iron from iron ore, comprising the steps of:
- charging iron ore into a direct reduction shaft (1),
- providing a hydrogen-rich reduction gas comprising at least 80 wt.% hydrogen gas,
- heating the hydrogen-rich reduction gas to a predetermined temperature,
- introducing the heated hydrogen-rich reduction gas into the direct reduction shaft (1) in order to reduce the iron ore and produce sponge iron, and
- extracting the produced sponge iron from the direct reduction shaft (1),
- measuring the flow rate of the hydrogen-rich gas, and
- controlling a flow rate of iron ore into the direct reduction shaft (1) on basis of the measured flow rate of the hydrogen-rich gas and
- controlling a flow rate of the sponge iron extracted out of the direct reduction shaft (1) on basis of the measured flow rate of the hydrogen-rich gas, wherein
- the flow rate of the iron ore and the flow rate of the sponge iron are controlled such that they are proportional to the measured flow rate of the hydrogen-rich reduction gas, said method being **characterised in that** the flow rate of the hydrogen-rich reduction gas has a predetermined nominal value applied during a predetermined nominal operation condition of the direct reduction shaft (1), and wherein a predetermined initial decrease of the flow rate of the hydrogen-rich gas from said nominal value down to a threshold value is compensated by addition of methane gas to the hydrogen rich gas, without corresponding decrease of the flow rate of iron ore and sponge iron, and wherein the flow rate of the iron ore and the flow rate of the sponge iron are controlled on basis of the measured flow rate of the hydrogen gas when the flow rate of the hydrogen-rich gas decreases further below said threshold value.

2. A method according to claim 1, comprising the further step of measuring the composition of the hydrogen-rich reduction gas, wherein the flow rate of the iron ore into the shaft (1) and the flow rate of the sponge iron extracted out of the direct reduction shaft (1) are controlled on basis of the measured flow rate of the hydrogen-rich reduction gas and on basis of the measured composition of the hydrogen-rich reduction gas.

3. A method according to claim 2, wherein the composition of the hydrogen-rich reduction gas is evaluated with regard to its content of reduction means that will result in the direct reduction of the iron ore, and wherein the content of reduction means and the flow rate of the hydrogen-rich reduction gas are multiplied with each other for the generation of an input value on basis of which the flow rates of the iron ore and the sponge iron are controlled.

4. A method according any one of claims 1-3, wherein the flow rate of the iron ore and the flow rate of the sponge iron are controlled such that they correspond to each other and such that the combined level of iron ore and sponge iron in the direct reduction shaft (1) is maintained at a constant level.

5. A method according to claim 1, comprising the step of measuring a pressure in the direct reduction shaft (1), wherein the addition of said methane gas is controlled such that a nominal operation pressure is maintained in the direct reduction shaft (1) upon decrease of the flow rate of hydrogen-rich reduction gas from said nominal value to said threshold value.

6. A method according to any one of claims 1-5, wherein the hydrogen-rich gas comprises at least 95 wt.% hydrogen gas.

7. A method according to any one of claims 1-6, wherein the hydrogen-rich reduction gas is comprised by hydrogen gas produced in an electrolyser and hydrogen gas obtained from off-gas extracted from the direct reduction shaft (1).

8. A method according to claim 7 and any one of claims 1-6, wherein the step of measuring the flow rate of the hydrogen-rich gas comprises measuring the flow rate of the hydrogen carried by the off-gas or measuring the flow rate of the hydrogen gas obtained from the off-gas. Preferably, the method comprises the step of mixing the hydrogen gas from electrolyser with the hydrogen gas obtained from the off-gas, wherein the measurement is performed upstream a point where said hydrogen gases are mixed, as seen in a flow direction of the respective hydrogen gas.

9. An arrangement for producing sponge iron, comprising:
- a direct reduction shaft (1),
- a device (2) for charging iron ore into the direct reduction shaft (1),
- a device (3) for extracting sponge iron from the direct reduction shaft (1),
- a hydrogen-rich reduction gas source (4),
- a reduction gas line (5) extending from the hydrogen-rich reduction gas source (4, 13) to the direct reduction shaft (1),
- a heater (6) for heating the hydrogen-rich reduction gas in the reduction gas line (5),
- a flow rate meter (7) configured to measure the flow rate of the hydrogen-rich reduction gas in the reduction gas line (5), and
- a control unit (8) configured to control the device (2) for charging iron ore into the direct reduction shaft (1) and to control the device (3) for extracting sponge iron from the direct reduction shaft (1) on basis of input from the flow rate meter (7), such that the flow rate of the iron ore and the flow rate of the sponge iron are proportional to the measured flow rate of the hydrogen-rich reduction gas, said arrangement being **characterised in that** it comprises a methane gas source (10) and a valve device (11) for controlling a flow of methane gas from said methane gas source (10) into the reduction gas line (5), and wherein the flow rate of the hydrogen-rich reduction gas has a predetermined nominal value applied during a predetermined nominal operation condition of the direct reduction shaft (1), and wherein, as a response to a measured predetermined initial decrease of the flow rate of the hydrogen-rich gas from said nominal value down to a threshold value, the control unit (8) is configured to compensate for said decrease by controlling an addition of methane gas from the methane gas source to the hydrogen-rich reduction gas, without corresponding decrease of the flow rate of iron ore and sponge iron, and wherein control unit (8) is configured to control the flow rate of the iron ore and the flow rate of the sponge iron by controlling the device (2) for charging iron ore and the device (3) for extracting sponge iron on basis of the measured flow rate of the hydrogen-rich reduction gas when the flow rate of the hydrogen-rich reduction gas decreases further below said threshold value.

10. An arrangement according to claim 9, wherein the arrangement comprises a sensor (9) for measuring the composition of the hydrogen-rich reduction gas, and wherein the control unit (8) is configured control the device (2) for charging iron ore into the direct reduction shaft (1) and to control the device (3) for extracting sponge iron from the direct reduction shaft (1) on basis of input from said sensor (9).

11. An arrangement according claim 10, wherein the control unit (8) is configured to evaluate the composition of the hydrogen-rich reduction gas with regard to its content of reduction means that will result in the direct reduction of the iron ore, and to multiply the content of reduction means and the flow rate of the hydrogen-rich reduction gas with each other and to generate an input value on basis of which the device (2) for charging iron ore and the device (3) for extracting sponge iron are controlled.

12. An arrangement according to any one of claim 9-11, wherein the control unit (8) is configured to control the device (2) for charging iron ore into the direct reduction shaft (1) and to control the device (3) for extracting sponge iron from the direct reduction shaft (1) such that flows of iron ore and sponge iron correspond to each other and such that the combined level of iron ore and sponge iron in the direct reduction shaft (1) is maintained at a constant level.

13. An arrangement according to claim 9, wherein the arrangement comprises a sensor (12) for measuring a pressure in the direct reduction shaft (1), and wherein the control unit (8) is configured to control the addition of said methane gas such that a nominal operation pressure is maintained in the direct reduction shaft (1) upon decrease of the flow rate of hydrogen-rich reduction gas from said nominal value to said threshold value.

14. An arrangement according to any one of claims 9-13, wherein the hydrogen-rich reduction gas source comprises an electrolyser (4) and an off-gas return line (13) for returning off-gas extracted from the direction reduction shaft (1).

15. An arrangement according to claim 18 and any one of claims 9-13, comprising a flow rate meter (16) configured to measure the flow rate of the hydrogen gas in the off-gas return line (13), wherein the control unit (8) is configured to control the device (2) for charging iron ore into the direct reduction shaft (1) and to control the device (3) for extracting sponge iron from the direct reduction shaft (1) on basis of input from the flow rate meter (16).

## Patentansprüche

1. Verfahren zum kontinuierlichen Herstellen von Eisenschwamm aus Eisenerz, umfassend die Schritte:
- Beschicken eines Direktreduktionsschachts (1) mit Eisenerz,
- Bereitstellen eines wasserstoffreichen Reduktionsgases, das mindestens 80 Gew.-% Wasserstoffgas umfasst,
- Erhitzen des wasserstoffreichen Reduktionsgases auf eine vorbestimmte Temperatur,
- Einleiten des erhitzten wasserstoffreichen Reduktionsgases in den Direktreduktionsschacht (1), um das Eisenerz zu reduzieren und Eisenschwamm herzustellen, und
- Entnehmen des hergestellten Eisenschwamms aus dem Direktreduktionsschacht (1),
- Messen der Durchflussrate des wasserstoffreichen Gases, und
- Steuern einer Durchflussrate von Eisenerz in den Direktreduktionsschacht (1) auf Basis der gemessenen Durchflussrate des wasserstoffreichen Gases, und
- Steuern einer Durchflussrate des aus dem Direktreduktionsschacht (1) entnommenen Eisenschwamms auf Basis der gemessenen Durchflussrate des wasserstoffreichen Gases, wobei
- die Durchflussrate des Eisenerzes und die Durchflussrate des Eisenschwamms so gesteuert werden, dass sie proportional zur gemessenen Durchflussrate des wasserstoffreichen Reduktionsgases sind, wobei das Verfahren **dadurch gekennzeichnet ist, dass** die Durchflussrate des wasserstoffreichen Reduktionsgases einen vorbestimmten Nennwert aufweist, der während einer vorbestimmten Nennbetriebsbedingung des Direktreduktionsschachts (1) angewendet wird, und wobei eine vorbestimmte anfängliche Abnahme der Durchflussrate des wasserstoffreichen Gases von dem Nennwert bis zu einem Schwellenwert durch Zugabe von Methangas zum wasserstoffreichen Gas ausgeglichen wird, ohne entsprechende Verringerung der Durchflussrate von Eisenerz und Eisenschwamm, und wobei die Durchflussrate des Eisenerzes und die Durchflussrate des Eisenschwamms auf Basis der gemessenen Durchflussrate des Wasserstoffgases gesteuert werden, wenn die Durchflussrate des wasserstoffreichen Gases weiter unter den Schwellenwert fällt.

2. Verfahren nach Anspruch 1, umfassend den weiteren Schritt des Messens der Zusammensetzung des wasserstoffreichen Reduktionsgases, wobei die Durchflussrate des Eisenerzes in den Schacht (1) und die Durchflussrate des aus dem Direktreduktionsschacht (1) entnommenen Eisenschwamms auf Basis der gemessenen Durchflussrate des wasserstoffreichen Reduktionsgases und auf Basis der gemessenen Zusammensetzung des wasserstoffreichen Reduktionsgases gesteuert werden.

3. Verfahren nach Anspruch 2, wobei die Zusammensetzung des wasserstoffreichen Reduktionsgases hinsichtlich seines Gehalts an Reduktionsmitteln bewertet wird, die zur Direktreduktion des Eisenerzes führen, und wobei der Gehalt an Reduktionsmitteln und die Durchflussrate des wasserstoffreichen Reduktionsgases miteinander multipliziert werden, um einen Eingabewert zu erzeugen, auf dessen Basis die Durchflussraten des Eisenerzes und des Eisenschwamms gesteuert werden.

4. Verfahren nach einem der Ansprüche 1 bis 3, wobei die Durchflussrate des Eisenerzes und die Durchflussrate des Eisenschwamms so gesteuert werden, dass sie einander entsprechen und dass der kombinierte Pegel von Eisenerz und Eisenschwamm im Direktreduktionsschacht (1) auf einem konstanten Niveau gehalten wird.

5. Verfahren nach Anspruch 1, umfassend den Schritt des Messens eines Drucks im Direktreduktionsschacht (1), wobei die Zugabe des Methangases so gesteuert wird, dass ein Nennbetriebsdruck im Direktreduktionsschacht (1) bei Abnahme der Durchflussrate des wasserstoffreichen Reduktionsgases von dem Nennwert auf den Schwellenwert aufrechterhalten wird.

6. Verfahren nach einem der Ansprüche 1 bis 5, wobei das wasserstoffreiche Gas mindestens 95 Gew.-% Wasserstoffgas umfasst.

7. Verfahren nach einem der Ansprüche 1 bis 6, wobei das wasserstoffreiche Reduktionsgas Wasserstoffgas umfasst, das in einem Elektrolyseur erzeugt wird, und Wasserstoffgas, das aus dem aus dem Direktreduktionsschacht (1) entnommenen Abgas gewonnen wird.

8. Verfahren nach Anspruch 7 und einem der Ansprüche 1 bis 6, wobei der Schritt des Messens der Durchflussrate des wasserstoffreichen Gases das Messen der Durchflussrate des vom Abgas mitgeführten Wasserstoffs oder das Messen der Durchflussrate des aus dem Abgas gewonnenen Wasserstoffgases umfasst. Vorzugsweise umfasst das Verfahren den Schritt des Mischens des Wasserstoffgases aus dem Elektrolyseur mit dem aus dem Abgas gewonnenen Wasserstoffgas, wobei die Messung stromaufwärts eines Punktes durchgeführt wird, an dem die Wasserstoffgase gemischt werden, in Strömungsrichtung des jeweiligen Wasserstoffgases betrachtet.

9. Anordnung zum Herstellen von Eisenschwamm, umfassend:
- einen Direktreduktionsschacht (1),
- eine Vorrichtung (2) zum Beschicken des Direktreduktionsschachts (1) mit Eisenerz,
- eine Vorrichtung (3) zum Entnehmen von Eisenschwamm aus dem Direktreduktionsschacht (1),
- eine wasserstoffreiche Reduktionsgasquelle (4),
- eine Reduktionsgasleitung (5), die sich von der wasserstoffreichen Reduktionsgasquelle (4, 13) zum Direktreduktionsschacht (1) erstreckt,
- einen Erhitzer (6) zum Erhitzen des wasserstoffreichen Reduktionsgases in der Reduktionsgasleitung (5),
- einen Durchflussmesser (7), der dazu ausgelegt ist, die Durchflussrate des wasserstoffreichen Reduktionsgases in der Reduktionsgasleitung (5) zu messen, und
- eine Steuereinheit (8), die dazu ausgelegt ist, die Vorrichtung (2) zum Beschicken des Direktreduktionsschachts (1) mit Eisenerz und die Vorrichtung (3) zum Entnehmen von Eisenschwamm aus dem Direktreduktionsschacht (1) auf Basis der Eingabe des Durchflussmessers (7) zu steuern, so dass die Durchflussrate des Eisenerzes und die Durchflussrate des Eisenschwamms proportional zur gemessenen Durchflussrate des wasserstoffreichen Reduktionsgases sind, wobei die Anordnung **dadurch gekennzeichnet ist, dass** sie eine Methangas-Quelle (10) und eine Ventilvorrichtung (11) zur Steuerung eines Methangas-Stroms von der Methangas-Quelle (10) in die Reduktionsgasleitung (5) umfasst, und wobei die Durchflussrate des wasserstoffreichen Reduktionsgases einen vorbestimmten Nennwert aufweist, der während einer vorbestimmten Nennbetriebsbedingung des Direktreduktionsschachts (1) angewendet wird, und wobei als Reaktion auf eine gemessene vorbestimmte anfängliche Abnahme der Durchflussrate des wasserstoffreichen Gases von dem Nennwert bis zu einem Schwellenwert die Steuereinheit (8) dazu ausgelegt ist, die Abnahme durch Steuern einer Zugabe von Methangas aus der Methangas-Quelle zum wasserstoffreichen Reduktionsgas auszugleichen, ohne entsprechende Verringerung der Durchflussrate von Eisenerz und Eisenschwamm, und wobei die Steuereinheit (8) dazu ausgelegt ist, die Durchflussrate des Eisenerzes und die Durchflussrate des Eisenschwamms durch Steuern der Vorrichtung (2) zum Beschicken mit Eisenerz und der Vorrichtung (3) zum Entnehmen von Eisenschwamm auf Basis der gemessenen Durchflussrate des wasserstoffreichen Reduktionsgases zu steuern, wenn die Durchflussrate des wasserstoffreichen Reduktionsgases weiter unter den Schwellenwert fällt.

10. Anordnung nach Anspruch 9, wobei die Anordnung einen Sensor (9) zum Messen der Zusammensetzung des wasserstoffreichen Reduktionsgases umfasst, und wobei die Steuereinheit (8) dazu ausgelegt ist, die Vorrichtung (2) zum Beschicken des Direktreduktionsschachts (1) mit Eisenerz und die Vorrichtung (3) zum Entnehmen von Eisenschwamm aus dem Direktreduktionsschacht (1) auf Basis der Eingabe des Sensors (9) zu steuern.

11. Anordnung nach Anspruch 10, wobei die Steuereinheit (8) dazu ausgelegt ist, die Zusammensetzung des wasserstoffreichen Reduktionsgases hinsichtlich seines Gehalts an Reduktionsmitteln zu bewerten, die zur Direktreduktion des Eisenerzes führen, und den Gehalt an Reduktionsmitteln und die Durchflussrate des wasserstoffreichen Reduktionsgases miteinander zu multiplizieren und einen Eingabewert zu erzeugen, auf dessen Basis die Vorrichtung (2) zum Beschicken mit Eisenerz und die Vorrichtung (3) zum Entnehmen von Eisenschwamm gesteuert werden.

12. Anordnung nach einem der Ansprüche 9 bis 11, wobei die Steuereinheit (8) dazu ausgelegt ist, die Vorrichtung (2) zum Beschicken des Direktreduktionsschachts (1) mit Eisenerz und die Vorrichtung (3) zum Entnehmen von Eisenschwamm aus dem Direktreduktionsschacht (1) so zu steuern, dass die Ströme von Eisenerz und Eisenschwamm einander entsprechen und dass der kombinierte Pegel von Eisenerz und Eisenschwamm im Direktreduktionsschacht (1) auf einem konstanten Pegel gehalten wird.

13. Anordnung nach Anspruch 9, wobei die Anordnung einen Sensor (12) zum Messen eines Drucks im Direktreduktionsschacht (1) umfasst, und wobei die Steuereinheit (8) dazu ausgelegt ist, die Zugabe des Methangases so zu steuern, dass ein Nennbetriebsdruck im Direktreduktionsschacht (1) bei Abnahme der Durchflussrate des wasserstoffreichen Reduktionsgases von dem Nennwert auf den Schwellenwert aufrechterhalten wird.

14. Anordnung nach einem der Ansprüche 9 bis 13, wobei die wasserstoffreiche Reduktionsgasquelle einen Elektrolyseur (4) und eine Abgasrückführleitung (13) zur Rückführung des aus dem Direktreduktionsschacht (1) entnommenen Abgases umfasst.

15. Anordnung nach Anspruch 14 und einem der Ansprüche 9 bis 13, umfassend einen Durchflussmesser (16), der dazu ausgelegt ist, die Durchflussrate des Wasserstoffgases in der Abgasrückführleitung (13) zu messen, wobei die Steuereinheit (8) dazu ausgelegt ist, die Vorrichtung (2) zum Beschicken des Direktreduktionsschachts (1) mit Eisenerz und die Vorrichtung (3) zum Entnehmen von Eisenschwamm aus dem Direktreduktionsschacht (1) auf Basis der Eingabe des Durchflussmessers (16) zu steuern.

## Revendications

1. Procédé pour la production en continu de fer spongieux à partir de minerai de fer, comprenant les étapes suivantes :
- le chargement de minerai de fer dans une cuve de réduction directe (1),
- la fourniture d'un gaz de réduction riche en hydrogène comprenant au moins 80 % en poids de gaz hydrogène,
- le chauffage du gaz de réduction riche en hydrogène à une température prédéterminée,
- l'introduction du gaz de réduction riche en hydrogène chauffé dans la cuve de réduction directe (1) afin de réduire le minerai de fer et de produire du fer spongieux, et
- l'extraction du fer spongieux produit hors de la cuve de réduction directe (1),
- la mesure du débit du gaz riche en hydrogène, et
- la commande d'un débit de minerai de fer dans la cuve de réduction directe (1) sur la base du débit mesuré du gaz riche en hydrogène et
- la commande d'un débit du fer spongieux extrait hors de la cuve de réduction directe (1) sur la base du débit mesuré du gaz riche en hydrogène, dans lequel
- le débit du minerai de fer et le débit du fer spongieux sont commandés de sorte qu'ils sont proportionnels au débit mesuré du gaz de réduction riche en hydrogène, ledit procédé étant **caractérisé en ce que** le débit du gaz de réduction riche en hydrogène a une valeur nominale prédéterminée appliquée pendant une condition de fonctionnement nominal prédéterminée de la cuve de réduction directe (1), et dans lequel une diminution initiale prédéterminée du débit du gaz riche en hydrogène de ladite valeur nominale jusqu'à une valeur seuil est compensée par l'ajout de gaz méthane au gaz riche en hydrogène, sans diminution correspondante du débit de minerai de fer et de fer spongieux, et dans lequel le débit du minerai de fer et le débit du fer spongieux sont commandés sur la base du débit mesuré du gaz hydrogène lorsque le débit du gaz riche en hydrogène diminue davantage en dessous de ladite valeur seuil.

2. Procédé selon la revendication 1, comprenant l'étape supplémentaire de mesure de la composition du gaz de réduction riche en hydrogène, dans lequel le débit du minerai de fer dans la cuve (1) et le débit du fer spongieux extrait hors de la cuve de réduction directe (1) sont commandés sur la base du débit mesuré du gaz de réduction riche en hydrogène et sur la base de la composition mesurée du gaz de réduction riche en hydrogène.

3. Procédé selon la revendication 2, dans lequel la composition du gaz de réduction riche en hydrogène est évaluée en ce qui concerne sa teneur en moyens de réduction qui résultera en la réduction directe du minerai de fer, et dans lequel la teneur en moyens de réduction et le débit du gaz de réduction riche en hydrogène sont multipliés l'un avec l'autre pour la génération d'une valeur d'entrée sur la base de laquelle les débits du minerai de fer et du fer spongieux sont commandés.

4. Procédé selon l'une quelconque des revendications 1 à 3, dans lequel le débit du minerai de fer et le débit du fer spongieux sont commandés de sorte qu'ils correspondent l'un à l'autre et de sorte que le niveau combiné de minerai de fer et de fer spongieux dans la cuve de réduction directe (1) est maintenu à un niveau constant.

5. Procédé selon la revendication 1, comprenant l'étape de mesure d'une pression dans la cuve de réduction directe (1), dans lequel l'ajout dudit gaz méthane est commandé de telle sorte qu'une pression de fonctionnement nominale est maintenue dans la cuve de réduction directe (1) lors de la diminution du débit de gaz de réduction riche en hydrogène de ladite valeur nominale à ladite valeur seuil.

6. Procédé selon l'une quelconque des revendications 1 à 5, dans lequel le gaz riche en hydrogène comprend au moins 95 % en poids de gaz hydrogène.

7. Procédé selon l'une quelconque des revendications 1 à 6, dans lequel le gaz de réduction riche en hydrogène est constitué par du gaz hydrogène produit dans un électrolyseur et du gaz hydrogène obtenu à partir d'effluent gazeux extrait de la cuve de réduction directe (1).

8. Procédé selon la revendication 7 et l'une quelconque des revendications 1 à 6, dans lequel l'étape de mesure du débit du gaz riche en hydrogène comprend la mesure du débit de l'hydrogène transporté par l'effluent gazeux ou la mesure du débit du gaz hydrogène obtenu à partir de l'effluent gazeux. De préférence, le procédé comprend l'étape de mélange du gaz hydrogène provenant de l'électrolyseur avec le gaz hydrogène obtenu à partir de l'effluent gazeux, dans lequel la mesure est effectuée en amont d'un point où lesdits gaz hydrogènes sont mélangés, tel que vu dans une direction d'écoulement du gaz hydrogène respectif.

9. Agencement pour la production de fer spongieux, comprenant :
- une cuve de réduction directe (1),
- un dispositif (2) pour le chargement de minerai de fer dans la cuve de réduction directe (1),
- un dispositif (3) pour l'extraction de fer spongieux hors de la cuve de réduction directe (1),
- une source de gaz de réduction riche en hydrogène (4),
- une conduite de gaz de réduction (5) s'étendant de la source de gaz de réduction riche en hydrogène (4,13) à la cuve de réduction directe (1),
- un dispositif de chauffage (6) pour le chauffage du gaz de réduction riche en hydrogène dans la conduite de gaz de réduction (5),
- un débitmètre (7) configuré pour mesurer le débit du gaz de réduction riche en hydrogène dans la conduite de gaz de réduction (5), et
- une unité de commande (8) configurée pour commander le dispositif (2) pour le chargement de minerai de fer dans la cuve de réduction directe (1) et pour commander le dispositif (3) pour l'extraction de fer spongieux hors de la cuve de réduction directe (1) sur la base d'une entrée provenant du débitmètre (7), de telle sorte que le débit du minerai de fer et le débit du fer spongieux sont proportionnels au débit mesuré du gaz de réduction riche en hydrogène, ledit agencement étant **caractérisé en ce qu'**il comprend une source de gaz méthane (10) et un dispositif de vanne (11) pour la commande d'un écoulement de gaz méthane provenant de ladite source de gaz méthane (10) dans la conduite de gaz de réduction (5), et dans lequel le débit du gaz de réduction riche en hydrogène a une valeur nominale prédéterminée appliquée pendant une condition de fonctionnement nominal prédéterminée de la cuve de réduction directe (1), et dans lequel, en réponse à une diminution initiale prédéterminée mesurée du débit du gaz riche en hydrogène de ladite valeur nominale jusqu'à une valeur seuil, l'unité de commande (8) est configurée pour compenser ladite diminution par la commande d'un ajout de gaz méthane depuis la source de gaz méthane au gaz de réduction riche en hydrogène, sans diminution correspondante du débit de minerai de fer et de fer spongieux, et dans lequel l'unité de commande (8) est configurée pour commander le débit du minerai de fer et le débit du fer spongieux par la commande du dispositif (2) pour le chargement de minerai de fer et du dispositif (3) pour l'extraction de fer spongieux sur la base du débit mesuré du gaz de réduction riche en hydrogène lorsque le débit du gaz de réduction riche en hydrogène diminue davantage en dessous de ladite valeur seuil.

10. Agencement selon la revendication 9, dans lequel l'agencement comprend un capteur (9) pour la mesure de la composition du gaz de réduction riche en hydrogène, et dans lequel l'unité de commande (8) est configurée pour commander le dispositif (2) pour le chargement de minerai de fer dans la cuve de réduction directe (1) et pour commander le dispositif (3) pour l'extraction de fer spongieux hors de la cuve de réduction directe (1) sur la base d'une entrée provenant dudit capteur (9).

11. Agencement selon la revendication 10, dans lequel l'unité de commande (8) est configurée pour évaluer la composition du gaz de réduction riche en hydrogène en ce qui concerne sa teneur en moyens de réduction qui résultera en la réduction directe du minerai de fer, et pour multiplier la teneur en moyens de réduction et le débit du gaz de réduction riche en hydrogène l'un avec l'autre et pour générer une valeur d'entrée sur la base de laquelle le dispositif (2) pour le chargement de minerai de fer et le dispositif (3) pour l'extraction de fer spongieux sont commandés.

12. Agencement selon l'une quelconque des revendications 9 à 11, dans lequel l'unité de commande (8) est configurée pour commander le dispositif (2) pour le chargement de minerai de fer dans la cuve de réduction directe (1) et pour commander le dispositif (3) pour l'extraction de fer spongieux hors de la cuve de réduction directe (1) de sorte que des écoulements de minerai de fer et de fer spongieux correspondent l'un à l'autre et de sorte que le niveau combiné de minerai de fer et de fer spongieux dans la cuve de réduction directe (1) est maintenu à un niveau constant.

13. Agencement selon la revendication 9, dans lequel l'agencement comprend un capteur (12) pour la mesure d'une pression dans la cuve de réduction directe (1), et dans lequel l'unité de commande (8) est configurée pour commander l'ajout dudit gaz méthane de sorte qu'une pression de fonctionnement nominale est maintenue dans la cuve de réduction directe (1) lors de la diminution du débit de gaz de réduction riche en hydrogène de ladite valeur nominale à ladite valeur seuil.

14. Agencement selon l'une quelconque des revendications 9 à 13, dans lequel la source de gaz de réduction riche en hydrogène comprend un électrolyseur (4) et une conduite de retour d'effluent gazeux (13) pour le retour d'effluent gazeux extrait de la cuve de réduction directe (1).

15. Agencement selon la revendication 14 et l'une quelconque des revendications 9 à 13, comprenant un débitmètre (16) configuré pour mesurer le débit du gaz hydrogène dans la conduite de retour d'effluent gazeux (13), dans lequel l'unité de commande (8) est configurée pour commander le dispositif (2) pour le chargement de minerai de fer dans la cuve de réduction directe (1) et pour commander le dispositif (3) pour l'extraction de fer spongieux hors de la cuve de réduction directe (1) sur la base d'une entrée provenant du débitmètre (16).
